(19) Europäisches Patentamt
European Patent Office
Office européen des brevets

(11) **EP 4 564 958 A1**

(12) **EUROPEAN PATENT APPLICATION**
published in accordance with Art. 153(4) EPC

(43) Date of publication:
**04.06.2025 Bulletin 2025/23**

(21) Application number: **22952571.2**

(22) Date of filing: **29.07.2022**

(51) International Patent Classification (IPC):
**H04W 72/04** (2023.01)

(86) International application number:
**PCT/CN2022/109250**

(87) International publication number:
**WO 2024/021125 (01.02.2024 Gazette 2024/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventor: **WANG, Lei**
**Beijing 100085 (CN)**

(74) Representative: **Dehns Germany Partnerschaft mbB**
**Theresienstraße 6-8**
**80333 München (DE)**

(54) **UPLINK TRANSMISSION SWITCHING METHOD AND APPARATUS, UPLINK TRANSMISSION CONTROL METHOD AND APPARATUS, COMMUNICATION APPARATUS, AND STORAGE MEDIUM**

(57) The present disclosure relates to an uplink transmission switching method and apparatus, an uplink transmission control method and apparatus, a communication apparatus, and a storage medium. The uplink transmission switching method comprises: determining an uplink frequency band group for uplink transmission switching; and performing uplink transmission switching among uplink frequency bands included in the uplink frequency band group. According to the present disclosure, a terminal may determine an uplink frequency band group for uplink transmission switching, wherein the uplink frequency band group may comprise one or more frequency bands, and the number of the frequency bands included in the uplink frequency band group may be less than the number of uplink frequency bands supported by the terminal, or less than the number of uplink frequency bands corresponding to carriers configured by a network device for the terminal for uplink transmission switching.

determining an uplink frequency band group for the uplink transmission switching — S101

performing the uplink transmission switching among uplink frequency bands comprised in the uplink frequency band group — S102

FIG. 1

## Description

## TECHNICAL FIELD

The present disclosure relates to a field of communication technology, and more particularly, to a method for uplink transmission switching, a method for uplink transmission control, a system for uplink transmission switching, an apparatus for uplink transmission switching, an apparatus for uplink transmission control, a communication apparatus, and a computer-readable storage medium.

## BACKGROUND

In the related art, the terminal may indicate to perform the uplink transmission switching (UL TX switching) on two upper frequency bands. However, with the development of communication technology, there is a growing need for uplink transmission switching across a greater number of uplink frequency bands. For instance, terminals are now required to support uplink transmission switching among three or four uplink frequency bands.

Compared to the uplink transmission switching among fewer frequency bands, performing uplink transmission switching among more uplink frequency bands increases complexity. The complexity primarily manifests in terms of hardware complexity, software complexity, and processing complexity during the switching procedure.

## SUMMARY

In view of this, embodiments of the present disclosure propose a method for uplink transmission switching, a method for uplink transmission control, a system for uplink transmission switching, an apparatus for uplink transmission switching, an apparatus for uplink transmission control, a communication apparatus, and a computer-readable storage medium to solve technical problems in the related art.

According to a first aspect of the embodiments of the present disclosure, a method for the uplink transmission switching is proposed, which is performed by a terminal. The method includes: determining an uplink frequency band group for the uplink transmission switching; performing the uplink transmission switching among uplink frequency bands included in the uplink frequency band group.

According to a second aspect of the embodiments of the present disclosure, a method for uplink transmission control is proposed, which is performed by a network device. The method includes: determining an uplink frequency band group for a terminal to perform uplink transmission switching; not scheduling or configuring the terminal for uplink transmission in an uplink frequency band beyond the uplink frequency band group.

According to a third aspect of the embodiments of the present disclosure, an apparatus for uplink transmission switching is proposed, including: a processing module configured to determine an uplink frequency band group for the uplink transmission switching; and perform the uplink transmission switching among uplink frequency bands included in the uplink frequency band group.

According to a fourth aspect of the embodiments of the present disclosure, an apparatus for uplink transmission control is proposed, including: a processing module configured to determine an uplink frequency band group for a terminal to perform uplink transmission switching; not schedule or configure the terminal for uplink transmission in an uplink frequency band beyond the uplink frequency band group.

According to a fifth aspect of the embodiments of the present disclosure, a system for uplink transmission switching is proposed, including a terminal and a network device, where the terminal is configured to implement the above method for uplink transmission switching, and the network device is configured to implement the above method for uplink transmission control.

According to a sixth aspect of the disclosed embodiment, a communication apparatus is proposed, including: a processor; a memory used for storing a computer program; when the computer program is performed by the processor, the above method for uplink transmission switching is implemented.

According to a seventh aspect of the disclosed embodiment, a communication apparatus is proposed, including: a processor; a memory used for storing a computer program; when the computer program is performed by the processor, the above method for uplink transmission control is implemented.

According to an eighth aspect of the embodiments of the present disclosure, a computer-readable storage medium is proposed for storing a computer program, and when the computer program is performed by a processor, the above-mentioned method for uplink transmission switching is implemented.

According to a ninth aspect of the embodiments of the present disclosure, a computer-readable storage medium is proposed for storing a computer program, when the computer program is performed by a processor, the above-mentioned method for uplink transmission control is implemented.

According to the embodiments of the present disclosure, the terminal may determine the uplink frequency band group for the uplink transmission switching, where the uplink frequency band group may include one or a plurality of frequency bands, and a number of frequency bands included in the uplink frequency band group may be less than a number of uplink frequency bands supported by the terminal, or less than a number of uplink frequency bands corresponding to carriers configured by the network device for the terminal for the uplink transmission switching.

## BRIEF DESCRIPTION OF THE DRAWINGS

In order to illustrate technical solutions in embodiments of the present disclosure more clearly, accompanying drawings to be used in the description of embodiments will be briefly introduced below. Apparently, the drawings in the following description only show some embodiments of the present disclosure. For those ordinarily skilled in the art, other drawings may also be obtained according to these drawings without any creative effort.

FIG. 1 is a schematic flowchart illustrating a method for uplink transmission switching according to an embodiment of the present disclosure.

FIG. 2 is a schematic flowchart illustrating another method for uplink transmission switching according to an embodiment of the present disclosure.

FIG. 3 is a schematic diagram illustrating a time-domain pattern according to an embodiment of the present disclosure.

FIG. 4 is a schematic flowchart illustrating another method for uplink transmission switching according to an embodiment of the present disclosure.

FIG. 5 is a schematic diagram illustrating a change in an uplink frequency band group where uplink transmission switching is performed according to an embodiment of the present disclosure.

FIG. 6 is a schematic flowchart illustrating another method for uplink transmission switching according to an embodiment of the present disclosure.

FIG. 7 is a schematic diagram illustrating another change in an uplink frequency band group where uplink transmission switching is performed according to an embodiment of the present disclosure.

FIG. 8 is a schematic flowchart illustrating another method for uplink transmission switching according to an embodiment of the present disclosure.

FIG. 9 is a schematic flowchart illustrating a method for uplink transmission control according to an embodiment of the present disclosure.

FIG. 10 is a schematic block diagram illustrating an apparatus for uplink transmission switching according to an embodiment of the present disclosure.

FIG. 11 is a schematic block diagram illustrating an apparatus for uplink transmission control according to an embodiment of the present disclosure.

FIG. 12 is a schematic block diagram illustrating an apparatus for uplink transmission control according to an embodiment of the present disclosure.

FIG. 13 is a schematic block diagram illustrating an apparatus for uplink transmission switching according to an embodiment of the present disclosure.

## DETAILED DESCRIPTION

In the following, the technical solutions in the embodiments of the present disclosure will be clearly and completely described with reference to the attached drawings in the embodiments of the present disclosure. Obviously, the described embodiments are only a part of the embodiments, but not all of the embodiments of the present disclosure. Based on the embodiments of the present disclosure, all other embodiments obtained by those of skilled in the art without paying creative work fall within the scope of the present disclosure.

Terms used in the embodiments of the present disclosure are for the purpose of describing particular examples only, and are not intended to limit the present disclosure. Terms determined by "a", and "the" in their singular forms in the embodiments of the present disclosure and the appended claims are also intended to include plurality, unless clearly indicated otherwise in the context. It should also be understood that the term "and/or" as used herein refers to and includes any and all possible combinations of one or more of the associated listed items.

It should be understood that, although the terms "first," "second," "third," and the like may be used in the embodiments of the present disclosure to describe various information, such information should not be limited to these terms. These terms are only used to distinguish one category of information from another. For example, without departing from the scope of the embodiments of the present disclosure, first information may be referred as second information; and similarly, the second information may also be referred as the first information. Depending on the context, the term "if" as used herein may be interpreted as "when" or "upon" or "in response to determining".

For purposes of brevity and ease of understanding, terms "greater than" or "less than", "higher than" or "lower than" are used herein when characterizing a magnitude relationship. However, for those skilled in the art, it can be understood that the term "greater than" also covers the meaning of "greater than or equal to", and the term "less than" also covers the meaning of "less than or equal to"; and the term "higher than" covers the meaning of "higher than and equal to", and the term "lower than" also covers the meaning of "lower than and equal to.

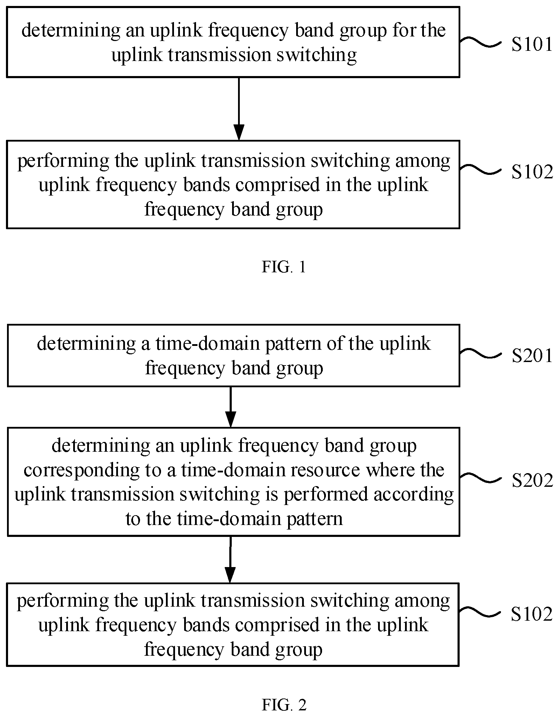

FIG. 1 is a schematic flowchart illustrating a method for uplink transmission switching according to an embodiment of the present disclosure. The method for uplink transmission switching shown in the embodiments may be performed by a terminal, and the terminal includes but is not limited to a mobile phone, a tablet computer, a wearable device, a sensor, an Internet of Things device, and other communication devices. The terminal may communicate with a network device, and the network device includes but is not limited to a network device in a communication system such as 4G, 5G, and 6G, for example, a base station, a core network, and the like.

As shown in FIG. 1, the method for uplink transmission switching may include the following steps:

in step S101, an uplink frequency band group for the uplink transmission switching (UL TX switching) is determined;

in step 102, the uplink transmission switching is performed among uplink frequency bands (specifically, carriers corresponding to the uplink frequency bands) included in the uplink frequency band group. The terminal may support dual transmission links (2TX) in both the uplink frequency band before switching and the uplink frequency band after switching.

In an embodiment, the scenarios where the terminal performs the uplink transmission switching include but are not limited to dual connection (such as EN-DC), carrier aggregation (such as inter-band carrier aggregation Inter-band CA), Supplementary Uplink (SUL), and other scenarios.

For example, a scenario where the terminal performs the uplink transmission switching, which switches from a first uplink frequency band to a second uplink frequency band is taken as an example.

In a dual connection scenario, the terminal may perform the uplink transmission switching from a primary cell group carrier to a secondary cell group carrier, where the primary cell group carrier belongs to the first uplink frequency band and the secondary cell group carrier belongs to the second uplink frequency band.

In a carrier aggregation scenario, for example, the carrier aggregation of carriers from frequency band, band # 1 and frequency band, band # 2, the terminal performs the uplink transmission switching and may switch from the carrier in band # 1 to the carrier in band # 2, where the first uplink frequency band may be the band # 1 and the second uplink frequency band may be the band # 2.

In a supplementary uplink scenario, the terminal may perform the uplink transmission switching from a normal uplink carrier to a supplementary uplink carrier, where the normal uplink carrier belongs to the first uplink frequency band and the supplementary uplink carrier belongs to the second uplink frequency band.

In an embodiment, the strategies for uplink transmission switching performed by the terminal include but are not limited to the following two approaches:

the terminal does not support the simultaneous uplink transmission in two uplink frequency bands, i.e. SwitchedUL;

the terminal supports simultaneous uplink transmission in two uplink frequency bands, i.e., DualUL.

The strategy used by the terminal should be indicated by the network device. For example, the network may provide an indication through a Radio Resource Control (RRC) signaling.

In an embodiment, when the terminal currently performs the uplink transmission switching, only switching between two uplink frequency bands is considered for the above three application scenarios. In this case, the terminal only needs to prepare for communication on these two uplink frequency bands. However, when the terminal needs to support the uplink transmission switching among more than two frequency bands, the terminal needs to prepare for communication on more than two uplink frequency bands, which increases the complexity of the uplink transmission switching. Thus, it is necessary to consider how to reduce the complexity of the uplink transmission switching.

According to the embodiments of the present disclosure, the terminal may determine the uplink frequency band group for the uplink transmission switching, where the uplink frequency band group may include one or a plurality of frequency bands, and a number of frequency bands included in the uplink frequency band group may be less than a number of uplink frequency bands supported by the terminal, or less than a number of uplink frequency bands corresponding to carriers configured by the network device for the terminal for the uplink transmission switching.

For example, the uplink frequency band group may include two uplink frequency bands, and the number of uplink frequency bands supported by the terminal, or the number of uplink frequency bands corresponding to the carrier configured by the network device for the terminal for the uplink transmission switching, may be three or four. When the uplink frequency band group includes two uplink frequency bands, it may also be referred to as an uplink frequency band pair (UL band pair).

Accordingly, when the terminal performs the uplink transmission switching among the uplink frequency bands included in the uplink frequency band group, the switching only occurs between one uplink frequency band in the uplink frequency band group to another frequency band in the uplink frequency band group, rather than switching to an uplink frequency band beyond the uplink frequency band group. As a result, the terminal only needs to prepare for communication on the uplink frequency band in the uplink frequency band group (such as in terms of software, hardware, switching process, etc.), without preparing for communication on the uplink frequency band beyond the uplink frequency band group, which is beneficial for reducing the complexity of the uplink transmission switching for the terminal.

It should be noted that the terminal does not need to prepare for communication on the uplink frequency band beyond the uplink frequency band group, which means that during an effective period corresponding to the currently used uplink frequency band group, no preparation is needed for communication on the uplink frequency band beyond the uplink frequency band group. If, after the effective period, it is necessary to change to perform the uplink transmission switching among uplink frequency bands included in another uplink frequency band group, the terminal needs to prepare for communication on the uplink frequency bands included in another uplink frequency band group after the effective period. Nevertheless, this approach may still reduce the complexity of the uplink transmission switching for the terminal during the effective period. In addition, the uplink frequency bands included in different uplink frequency band groups may be completely different or partially the same. The terminal may perform the uplink transmission switching and support an uplink transmission switching mechanism in Rel-17.

FIG. 2 is a schematic flowchart of another method for uplink transmission switching according to an embodiment of the present disclosure. As shown in FIG. 2, the determining the uplink frequency band group for the uplink transmission switching includes:

in step S201, a time-domain pattern of the upper frequency band group is determined;
in step S202, an uplink frequency band group corresponding to a time-domain resource where the uplink transmission switching is performed is determined according to the time-domain pattern.

In an embodiment, the uplink frequency band group on which the uplink transmission switching performed by the terminal is based may be changed. For example, the uplink transmission switching may be performed based on different uplink frequency band groups on different time-domain resources. The corresponding relationship between the uplink frequency band group on which the uplink transmission switching is based and the time-domain resources may be characterized by the time-domain pattern of the uplink frequency band group. The time-domain pattern may be agreed by a protocol or indicated by the network device.

The terminal may determine the time-domain resource where the uplink transmission switching is performed (i.e. the time-domain resource when the uplink transmission switching needs to be performed), and further determine the uplink frequency band group corresponding to the time-domain resource according to the time-domain pattern. Thus, based on the determined uplink frequency band group, the uplink transmission switching may be performed, and that is, the uplink transmission switching may be performed among the uplink frequency bands included in the determined uplink frequency band group.

For example, the network side configures four carriers for the terminal for the uplink transmission switching, where the four carriers are located in different uplink frequency bands, and an uplink frequency band group candidate set configured by the network device for the terminal includes P uplink frequency band groups. The uplink frequency band groups on which the uplink switching performed by the terminal is based belong to the uplink frequency band group candidate set.

For example, P=2, an uplink frequency band group # 1 includes two frequency bands, which are band # 1 and band # 2, respectively; carrier # 1 is located within band # 1, and carrier # 2 is located within band # 2. Thus, the carriers corresponding to the first uplink frequency band group are {carrier # 1, carrier # 2}. An uplink frequency band group # 2 includes two bands, which are band # 3 and band # 4, respectively; carrier # 3 is located within band # 3, and carrier # 4 is located within band # 4. Thus, the carriers corresponding to the second uplink frequency band group are {carrier # 3, carrier # 4}.

The terminal may determine the corresponding relationship between the time-domain resource (such as a time slot) and the uplink frequency band group based on the following formula:

$$\mathrm{mod(slot\ index/m,\ P)=pair\ index};$$

where, "mod" represents a modulo operation, "slot index" represents a time slot index, "m" represents an effective period of an uplink frequency band group (in time slots), "P" represents a number of uplink frequency band groups in an uplink frequency band group candidate set, for example, 2 in this embodiment, and "pair index" represents an index of an uplink frequency band group, for example, the index of uplink frequency band group # 1 is 1 and the index of uplink frequency band group # 2 is 2.

When mod (slot index/m, P)=1, i.e., pair index=1, it may be determined that the uplink frequency band group where the uplink transmission switching is performed is the uplink frequency band group # 1, and that is, the terminal performs the uplink transmission switching in the carrier {carrier # 1, carrier # 2} corresponding to the uplink frequency band group # 1.

When mod (slot index/m, P)=2, that is, pair index=2, it may be determined that the uplink frequency band group where the uplink transmission switching is performed is the uplink frequency band group # 2, and that is, the terminal performs the uplink transmission switching in the carrier {carrier # 3, carrier # 4} corresponding to the uplink frequency band group # 2.

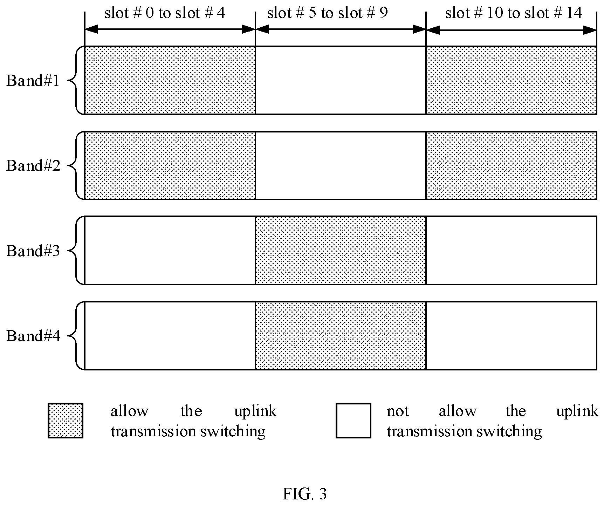

FIG. 3 is a schematic diagram of a time-domain pattern according to an embodiment of the present disclosure.

As shown in FIG. 3, in the case where m=5 and P=2, within a time-domain range from slot # 0 to slot # 14.

From slot # 0 to slot # 4, substituting into the above formula yields a corresponding pair index of 1. That is, from slot # 0 to slot # 4, the uplink transmission switching is performed on the carriers {carrier # 1, carrier # 2} corresponding to the uplink frequency band group # 1.

From slot # 5 to slot # 9, substituting into the above formula yields a corresponding pair index of 2. That is, from slot # 5 to slot # 9, the uplink transmission switching is performed on the carriers {carrier # 3, carrier # 4} corresponding to the uplink frequency band group # 1.

From slot # 10 to slot # 14, substituting into the above formula yields a corresponding pair index of 1. That is, from slot # 10 to slot # 14, the uplink transmission switching is performed on the carriers {carrier # 1, carrier # 2} corresponding to the uplink frequency band group #1.

By analogy, the uplink frequency band group corresponding to each time-domain resource may be determined, and the uplink transmission switching may then be performed among the carriers corresponding to the uplink frequency bands included in the determined uplink frequency band group.

The following provides exemplary explanations, through several embodiments, of changing the uplink frequency band group on which the uplink transmission switching is based.

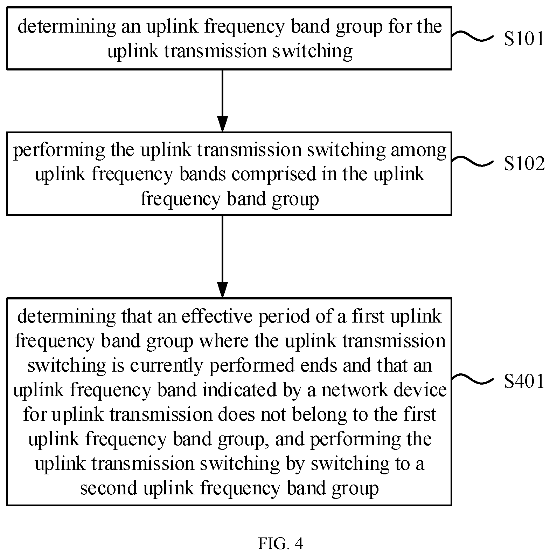

FIG. 4 is a schematic flowchart of another method for uplink transmission switching according to an embodiment of the present disclosure. As shown in FIG. 4, the method further includes:

in step S401, it is determined that an effective period of a first uplink frequency band group where the uplink transmission switching is currently performed ends and an uplink frequency band indicated by a network device for uplink transmission does not belong to the first uplink frequency band group, the uplink transmission switching is performed by switching to a second uplink frequency band group.

In an embodiment, the uplink frequency band group on which the uplink transmission switching performed by the terminal is based may be changed. For example, the terminal may determine whether the effective period of the first uplink frequency band group where the uplink transmission switching is currently performed has ended. If the effective period has ended, the uplink frequency band group where the uplink transmission switching is currently performed may be changed. However, changing the uplink frequency band group where the uplink transmission switching is currently performed requires adjustments to certain internal logic of the terminal, which incurs certain consumption.

Thus, it may be further determined whether the uplink frequency band indicated by the network device for the uplink transmission belongs to the first uplink frequency band group.

If the uplink frequency band indicated by the network device for the uplink transmission still belongs to the first uplink frequency band group, the uplink transmission switching that is performed on the uplink frequency bands in the first uplink frequency band group may still be switched to the uplink frequency band indicated by the network device for the uplink transmission, which meets communication requirements. Thus, in this case, there is no need to change the uplink frequency band group where uplink transmission switching is currently performed, i.e., the uplink transmission switching is still performed among the uplink frequency bands included in the first uplink frequency band group, which is beneficial for reducing consumption of the terminal.

If the uplink frequency band indicated by the network device for the uplink transmission no longer belongs to the first uplink frequency band group, the uplink transmission switching that is performed on the uplink frequency bands in the first uplink frequency band group cannot be switched to the uplink frequency band indicated by the network device for the uplink transmission, which cannot meet communication requirements. Thus, in this case, the uplink frequency band group where the uplink transmission switching is performed may be changed, such as switching to the second uplink frequency band group, and the uplink transmission switching may be performed among the uplink frequency bands included in the second uplink frequency band group, so as to meet communication requirements.

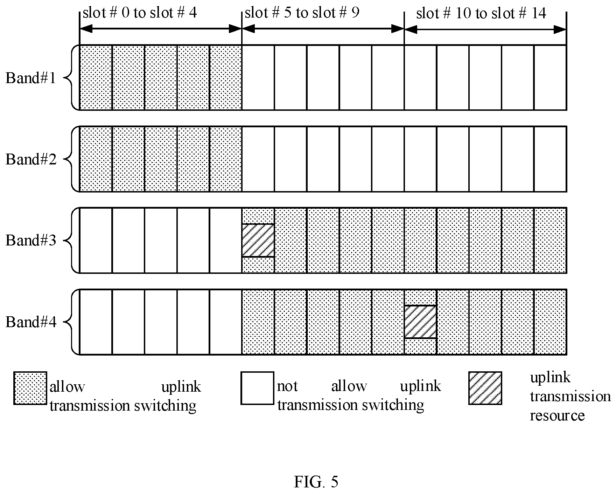

FIG. 5 is a schematic diagram of changing the uplink frequency band group where the uplink transmission switching is performed according to an embodiment of the present disclosure.

As shown in FIG. 5, the effective period of the uplink frequency band group is 5 time slots, and the first uplink frequency band group where the uplink transmission switching is currently performed includes uplink frequency bands, band # 1 and band # 2.

After the effective period of the first uplink frequency band group (such as slot # 0 to slot # 4) ends, if the uplink transmission resource indicated by the network device in slot # 5 is not within band # 1 or band # 2, but is within band # 3, the terminal may change the uplink frequency band group after slot # 4, such as switching to the second uplink frequency band group for the uplink transmission switching. The second uplink frequency band group may include band # 3 and band # 4. Accordingly, it may be ensured that the terminal may smoothly complete the uplink transmission within band # 3 based on the configuration of the network device.

After the effective period of the second uplink frequency band group (e.g. slot # 5 to slot # 9) ends, if the uplink transmission resource indicated by the network device in slot # 10 is within band # 4, i.e., still in the uplink frequency band corresponding to the second uplink frequency band group, the terminal may continue to perform the uplink transmission switching in the second uplink frequency band group.

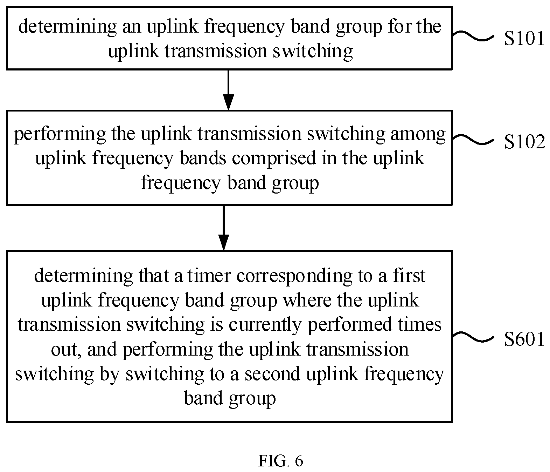

FIG. 6 is a schematic flowchart of another method for uplink transmission switching according to an embodiment of the present disclosure. As shown in FIG. 6, the method further includes:

in step S601, it is determined that a timer corresponding to a first uplink frequency band group where the uplink transmission switching is currently performed times out, and the uplink transmission switching is performed by switching to a second uplink frequency band group.

In an embodiment, the uplink frequency band group where the terminal performs the uplink transmission switching may be changed. For example, each uplink frequency band group may correspond to a timer, when the timer, corresponding to the first uplink frequency band group where the uplink transmission switching is currently performed, times out, the uplink frequency band group on which the uplink transmission switching is based may be changed, such as switching to the second uplink frequency band group for the uplink transmission switching.

In an embodiment, the timer is started when the uplink transmission in the uplink frequency band included in the first uplink frequency band group ends and is reset when the uplink transmission is performed in the uplink frequency band included in the first uplink frequency band group. Accordingly, it may prevent the timer from timing out while the uplink transmission is performed in the uplink frequency band included in the first uplink frequency band group, which may otherwise result in changing the uplink frequency band group on which the uplink transmission switching is based, and cause the ongoing uplink transmission performed in the uplink frequency bands included the first uplink frequency band group to be disrupted.

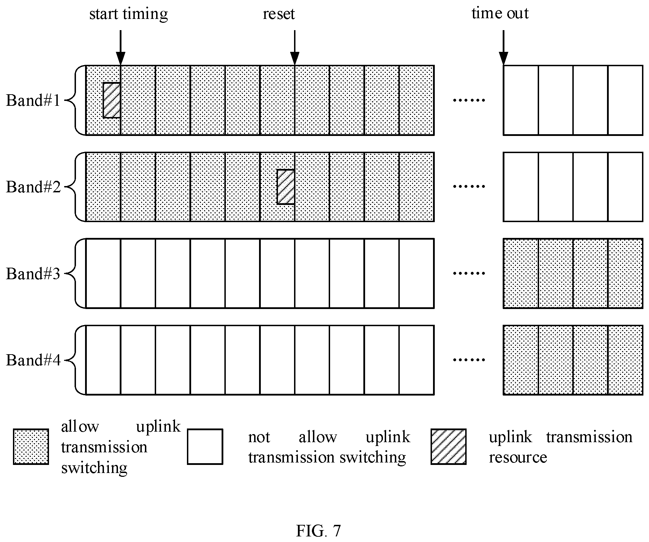

FIG. 7 is a schematic diagram of another changing in an uplink frequency band group where the uplink transmission switching is performed according to an embodiment of the present disclosure.

As shown in FIG. 7, the example remains that the first uplink frequency band group includes band # 1 and band # 2, and the second uplink frequency band group includes band # 3 and band # 4.

The timeout durations of the timers corresponding to different uplink frequency band groups may be the same or different. For simplicity, the example assumes that the timeout durations of the timers corresponding to the first uplink frequency band group and the second uplink frequency band group are the same. For example, if the timeout duration of the timer is 100 milliseconds, and a subcarrier spacing (SCS) is 15Hz, 100 milliseconds is equivalent to 100 time slots.

In FIG. 7, the terminal is currently performing the uplink transmission switching in the first frequency band group, and the uplink transmission in a memory of band # 1 ends in slot # 0, and the timer corresponding to the first frequency band group may start timing in slot # 1. Since the uplink transmission occurs again within band # 2 at slot # 4, and ends in slot # 4, the timer is reset in slot # 5, i.e. it restarts timing.

Until slot # 104, if no uplink transmission is performed within band # 1 or band # 2, the timer times out and the terminal may switch to the second uplink frequency band group for the uplink transmission switching.

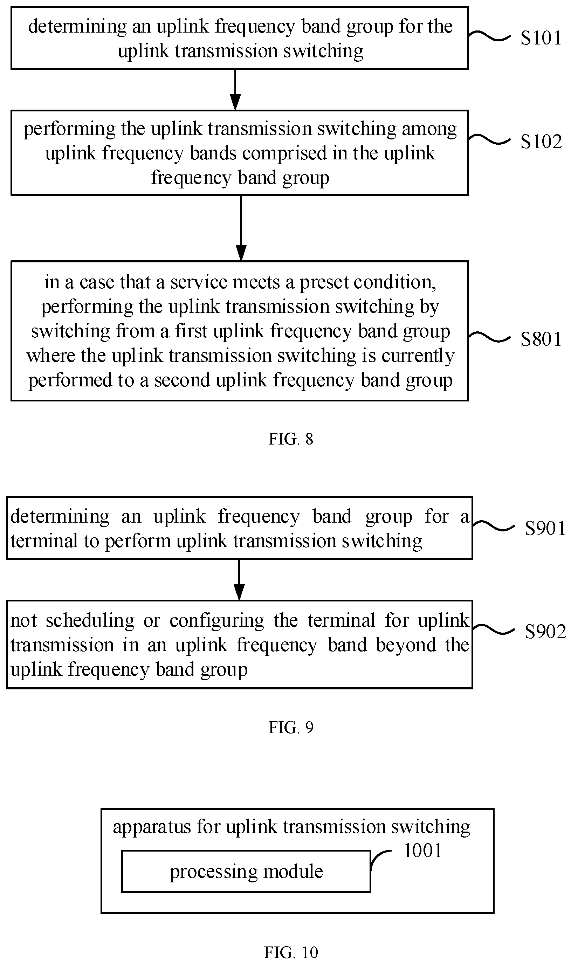

FIG. 8 is a schematic flowchart of another method for uplink transmission switching according to an embodiment of the present disclosure. As shown in FIG. 8, the method further includes:

in step S801, in a case that a service meets a preset condition, the uplink transmission switching is performed by switching from a first uplink frequency band group where the uplink transmission switching is currently performed to a second uplink frequency band group.

In an embodiment, the uplink frequency band group on which the uplink transmission switching performed by the terminal is based may be changed. For example, the terminal may analyze the corresponding communication services, and in the case that the service meets the preset condition, switch from the first uplink frequency band group where the uplink transmission switching is currently performed to the second uplink frequency band group, in order to ensure that the service requirements are met.

In an embodiment, the preset condition includes at least one of the following:

a service arrival rate being lower than an arrival rate value;
a service priority being higher or lower than a priority threshold; or
a quality of service (QoS) being lower than a quality of service threshold.

For example, the uplink transmission switching is performed on the first uplink frequency band group, the service arrival rate is lower than the arrival rate value, and it is difficult to meet the service's requirement for the arrival rate. Thus, the terminal may switch to the second uplink frequency band group for the uplink transmission switching to meet the service's requirement for the arrival rate.

For example, the uplink transmission switching is performed on the first uplink frequency band group, the service quality of the service is lower than the quality of service threshold, and it is difficult to meet the service's requirement for QoS. Thus, the terminal may switch to the second uplink frequency band group for the uplink transmission switching to meet the service's QoS requirements.

For example, the uplink transmission is performed on the first uplink frequency band group, the priority of the to-be-performed service is higher than the priority threshold, and it is determined that when the service is performed on the uplink frequency band corresponding to the first uplink frequency band group, the requirements of the higher-priority service (higher than the priority threshold) cannot be met. Thus, the terminal may choose to switch to the second uplink frequency band group to perform the uplink transmission switching, so as to meet the requirements of the higher-priority service.

For example, the uplink transmission switching is performed on the first uplink frequency band group, the priority of the to-be-performed service is lower than the priority threshold, and it may be determined that when the uplink frequency band in the first uplink frequency band group is designated for a higher-priority (higher than the priority threshold) service, the terminal may choose to switch to the second uplink frequency band group to perform the uplink transmission switching, so as to avoid a lower-priority service (lower than the priority threshold) occupying the uplink frequency band in the first uplink frequency band group.

In an embodiment, the method further includes: determining an uplink frequency band group candidate set, where the first uplink frequency band group and the second uplink frequency band group belong to the uplink frequency band group candidate set.

In an embodiment, the method includes: determining an initial uplink frequency band group according to an indication from the network device or a protocol agreement.

When the terminal initially performs the uplink transmission switching, it may switch among the uplink frequency bands included in the initial uplink frequency band group, and the initial uplink frequency band group may be indicated by the network device or determined based on the protocol agreement.

When the terminal changes the uplink frequency band group on which the uplink transmission switching is based, the terminal may select the uplink frequency band group that needs to be switched from the uplink frequency band group candidate set. For example, when the uplink transmission switching is performed among the uplink frequency bands included in the first uplink frequency band group, if the uplink frequency band group on which the uplink transmission switching is based needs to change, the terminal may select the second uplink frequency band group from the uplink frequency band group candidate set, and then switch to the second uplink frequency band group for the uplink transmission switching, and that is, the uplink transmission switching is performed among the uplink frequency bands included in the second uplink frequency band group. The uplink frequency band group candidate set may be indicated by the network device or determined based on the protocol agreement.

FIG. 9 is a schematic flowchart of a method for uplink transmission control according to an embodiment of the present disclosure. The method for uplink transmission control shown in this embodiment may be performed by a network device, and the network device may communicate with a terminal. The network device includes but is not limited to a base station in a communication system such as a 4G base station, a 5G base station, and a 6G base station. The terminal includes but is not limited to a communication device such as a mobile phone, a tablet, a wearable device, a sensor, an Internet of Things device, and other communication devices.

As shown in FIG. 9, the method for uplink transmission control may include the following steps:

in step S901, an uplink frequency band group for a terminal to perform uplink transmission switching is determined;
in step S902, a terminal is not scheduled or configured to perform an uplink transmission in an uplink frequency band beyond the uplink frequency band group (it may also be described as scheduling or configuring the terminal for the uplink transmission only in the uplink frequency band beyond the uplink frequency band group).

In an embodiment, the scenarios where the terminal performs the uplink transmission switching include but are not limited to dual connection (such as EN-DC), carrier aggregation (such as inter-band carrier aggregation Inter-band CA), Supplementary Uplink (SUL), and other scenarios.

For example, a scenario where the terminal performs the uplink transmission switching, which switches from a first uplink frequency band to a second uplink frequency band is taken as an example.

In a dual connection scenario, the terminal may perform the uplink transmission switching from a primary cell group carrier to a secondary cell group carrier, where the primary cell group carrier belongs to the first uplink frequency band and the secondary cell group carrier belongs to the second uplink frequency band.

In a carrier aggregation scenario, for example, the carrier aggregation of carriers from frequency band, band # 1 and frequency band, band # 2, the terminal performs the uplink transmission switching and may switch from the carrier in band # 1 to the carrier in band # 2, where the first uplink frequency band may be the band # 1 and the second uplink frequency band may be the band # 2.

In a supplementary uplink scenario, the terminal may perform the uplink transmission switching from a normal uplink carrier to a supplementary uplink carrier, where the normal uplink carrier belongs to the first uplink frequency band and the supplementary uplink carrier belongs to the second uplink frequency band.

In an embodiment, the strategies for uplink transmission switching performed by the terminal include but are not limited to the following two approaches:

the terminal does not support the simultaneous uplink transmission in two uplink frequency bands, i.e. SwitchedUL;
the terminal supports simultaneous uplink transmission in two uplink frequency bands, i.e., DualUL.

The strategy used by the terminal should be indicated by the network device. For example, the network may provide an indication through a Radio Resource Control (RRC) signaling.

In an embodiment, when the terminal currently performs the uplink transmission switching, only switching between two uplink frequency bands is considered for the above three application scenarios. In this case, the terminal only needs to prepare for communication on these two uplink frequency bands. However, when the terminal needs to support the uplink transmission switching among more than two frequency bands, the terminal needs to prepare for communication on more than two uplink frequency bands, which increases the complexity of the uplink transmission switching. Thus, it is necessary to consider how to reduce the complexity of the uplink transmission switching.

According to the embodiments of the present disclosure, the network device may determine the uplink frequency band group for the terminal to perform the uplink transmission switching, where the uplink frequency band group may include one or a plurality of frequency bands, and a number of frequency bands included in the uplink frequency band group may be less than a number of uplink frequency bands supported by the terminal, or less than a number of uplink frequency bands corresponding to carriers configured by the network device for the terminal for the uplink transmission switching.

For example, the uplink frequency band group may include two uplink frequency bands, the number of uplink frequency bands supported by the terminal, or the number of uplink frequency bands corresponding to the carrier configured by the network device for the terminal for the uplink transmission switching, may be three or four. When the uplink frequency band group includes two uplink frequency bands, it may also be referred to as an uplink frequency band pair (UL band pair).

Accordingly, the network devices only schedule or configure the terminal for the uplink transmission in the uplink frequency band within the uplink frequency band group, and do not schedule or configure the terminal for the uplink transmission in the uplink frequency band beyond the uplink frequency band group. Based on this, the terminal may ensure smooth communication by only performing the uplink transmission switching among the uplink frequency bands included in the uplink frequency band group, so as to meet the scheduling or configuration of the network device. On this basis, the terminal only needs to switch from one uplink frequency band in the uplink frequency band group to another frequency band in the uplink frequency band group, without switching to an uplink frequency band beyond the uplink frequency band group, and thus the terminal only needs to prepare for the communication on the uplink frequency band in the uplink frequency band group (such as in terms of software, hardware, switching process, etc.), without preparing for communication on the uplink frequency band beyond the uplink frequency band group, which is beneficial for reducing the complexity of the uplink transmission switching for the terminal.

In an embodiment, the determining the uplink frequency band group for the uplink transmission switching includes: determining a time-domain pattern of the uplink frequency band group; and determining an uplink frequency band group corresponding to a time-domain resource where the terminal performs the uplink transmission switching according to the time-domain pattern.

In an embodiment, the uplink frequency band group on which the uplink transmission switching performed by the terminal is based may be changed. For example, the uplink transmission switching may be performed based on different uplink frequency band groups on different time-domain resources. The corresponding relationship between the uplink frequency band group on which the uplink transmission switching is based and the time-domain resources may be characterized by the time-domain pattern of the uplink frequency band group. The time-domain pattern may be agreed by a protocol or indicated by the network device.

The network devices may determine the time-domain resource where the terminal performs the uplink transmission switching (i.e. the time-domain resources when the uplink transmission switching needs to be performed), and further determine the uplink frequency band group corresponding to the time-domain resource according to the time-domain pattern. That is, the terminal may perform the uplink transmission switching among the uplink frequency bands included in the determined uplink frequency band group, such that the terminal is not scheduled or configured to perform the uplink transmission in the uplink frequency band beyond the determined uplink frequency band group.

For example, the network side configures four carriers for the terminal for the uplink transmission switching, where the four carriers are located in different uplink frequency bands, and an uplink frequency band group candidate set configured by the network device for the terminal includes P uplink frequency band groups. The uplink frequency band groups on which the uplink switching performed by the terminal is based belong to the uplink frequency band group candidate set.

For example, P=2, an uplink frequency band group # 1 includes two frequency bands, which are band # 1 and band # 2, respectively; carrier # 1 is located within band # 1, and carrier # 2 is located within band # 2. Thus, the carriers corresponding to the first uplink frequency band group are {carrier # 1, carrier # 2}. An uplink frequency band group # 2 includes two bands, which are band # 3 and band # 4, respectively; carrier # 3 is located within band # 3, and carrier # 4 is located within band # 4. Thus, the carriers corresponding to the second uplink frequency band group are {carrier # 3, carrier # 4}.

The terminal may determine the corresponding relationship between the time-domain resource (such as a time slot) and the uplink frequency band group based on the following formula:

$$\text{mod(slot index/m, P)=pair index;}$$

where, "mod" represents a modulo operation, "slot index" represents a time slot index, "m" represents an effective period of an uplink frequency band group (in time slots), "P" represents a number of uplink frequency band groups in an uplink frequency band group candidate set, for example, 2 in this embodiment, and "pair index" represents an index of an uplink frequency band group, for example, the index of uplink frequency band group # 1 is 1 and the index of uplink frequency band group # 2 is 2.

When mod (slot index/m, P)=1, i.e., pair index=1, it may be determined that the uplink frequency band group where the uplink transmission switching is performed is the uplink frequency band group # 1, and that is, the terminal performs the uplink transmission switching in the carrier {carrier # 1, carrier # 2} corresponding to the uplink frequency band group # 1. Thus, the network device does not schedule or configure the terminal to perform the uplink transmission on carriers beyond {carrier # 1, carrier # 2}.

When mod (slot index/m, P)=2, that is, pair index=2, it may be determined that the uplink frequency band group where the uplink transmission switching is performed is the uplink frequency band group # 2, and that is, the terminal performs the uplink transmission switching in the carrier {carrier # 3, carrier # 4} corresponding to the uplink frequency band group # 2. Thus, the network device does not schedule or configure the terminal to perform the uplink transmission on carriers beyond { carrier # 3, carrier # 4}.

In an embodiment, the method further includes: determining that the effective period of a first uplink frequency band group where the terminal currently performs the uplink transmission switching ends, and indicating that an uplink frequency band used by the terminal for the uplink transmission does not belong to the first uplink frequency band group, and determining that the terminal switches to a second uplink frequency band group for the uplink transmission switching.

In an embodiment, the uplink frequency band group on which the uplink transmission switching performed by the terminal is based may be changed. For example, the network device may determine whether the effective period of the first uplink frequency band group where the terminal currently performs the uplink transmission switching ends. If it has ended, it may be determined that the terminal changes the uplink frequency band group where the uplink transmission switching is performed. However, changing the uplink frequency band group where the uplink transmission switching is performed requires adjustments to certain internal logic of the terminal, which incurs certain consumption.

Thus, it may be further determined whether the uplink frequency band indicated to the terminal for the uplink transmission belongs to the first uplink frequency band group.

If the uplink frequency band indicated by the network device to the terminal for the uplink transmission still belongs to the first uplink frequency band group, the uplink transmission switching that is performed on the uplink frequency bands in the first uplink frequency band group may still be switched to the uplink frequency band indicated by the network device for the uplink transmission, which meets communication requirements. Thus, in this case, it may be determined that the terminal does not change the uplink frequency band group where the uplink transmission switching is performed, i.e., the uplink transmission switching is still performed among the uplink frequency bands included in the first uplink frequency band group, which is beneficial for reducing consumption of the terminal.

If the uplink frequency band indicated by the network device to the terminal for the the uplink transmission no longer belongs to the first uplink frequency band group, the uplink transmission switching that is performed on the uplink frequency bands in the first uplink frequency band group cannot be switched to the uplink frequency band indicated by the network device for the uplink transmission, which cannot meet communication requirements. Thus, in this case, it may be determined that the terminal changes the uplink frequency band group where the uplink transmission switching is performed, such as switching to the second uplink frequency band group and performing the uplink transmission switching among the uplink frequency bands included in the second uplink frequency band group, in order to meet communication requirements.

In an embodiment, the method further includes: determining that a timer corresponding to a first uplink frequency band group where the terminal currently performs the uplink transmission switching times out, and determining that the terminal switches to a second uplink frequency band group for the uplink transmission switching.

In an embodiment, the uplink frequency band group on which the terminal performs the uplink transmission switching may be changed. For example, each uplink frequency band group may correspond to a timer, when the timer, corresponding to the first uplink frequency band group where the uplink transmission switching is currently performed, times out, it may be determined that the terminal changes the uplink frequency band group on which the uplink transmission switching is based, such as switching to the second uplink frequency band group for the uplink transmission switching.

In an embodiment, the timer is started when the uplink transmission in the uplink frequency band included in the first uplink frequency band group ends and is reset when the uplink transmission is performed in the uplink frequency band included in the first uplink frequency band group. Accordingly, it may prevent the timer from timing out while the uplink transmission is performed in the uplink frequency band included in the first uplink frequency band group, which may otherwise result in changing the uplink frequency band group on which the uplink transmission switching is based, and cause the ongoing uplink transmission performed in the uplink frequency bands included the first uplink frequency band group to be disrupted.

In an embodiment, the method further includes: in a case that it is determined that a service of the terminal meets a preset condition, the terminal performs the uplink transmission switching by switching from a first uplink frequency band group where the terminal currently performs to a second uplink frequency band group.

In an embodiment, the uplink frequency band group on which the uplink transmission switching performed by the terminal is based may be changed. For example, network devices may analyze the service that communicates with the terminal, and when the service meets the preset condition, the network device determines that the terminal switches from the first uplink frequency band group where the terminal currently performs the uplink transmission switching to the second uplink frequency band group for the uplink transmission switching, in order to ensure that the service requirements are met.

In an embodiment, the preset condition includes at least one of the following: a service arrival rate being lower than an arrival rate value; a service priority being higher or lower than a priority threshold; or a quality of service being below a quality of service threshold.

For example, the uplink transmission switching is performed on the first uplink frequency band group, the service arrival rate is lower than the arrival rate value, and it is difficult to meet the service's requirement for the arrival rate. Thus, it may be determined that the terminal switches to the second uplink frequency band group for the uplink transmission switching to meet the service's requirement for the arrival rate.

For example, the uplink transmission switching is performed on the first uplink frequency band group, the service quality of the service is lower than the quality of service threshold, and it is difficult to meet the service's requirement for QoS. Thus, it may be determined that the terminal switches to the second uplink frequency band group for the uplink transmission switching to meet the service's QoS requirements.

For example, the uplink transmission is performed on the first uplink frequency band group, the priority of the to-be-performed service is higher than the priority threshold, and it is determined that when the service is performed on the uplink frequency band corresponding to the first uplink frequency band group, the requirements of the higher-priority service (higher than the priority threshold) cannot be met. Thus, it may be determined that the terminal chooses to switch to the second uplink frequency band group to perform the uplink transmission switching, so as to meet the requirements of the higher-priority service.

For example, the uplink transmission switching is performed on the first uplink frequency band group, the priority of the to-be-performed service is lower than the priority threshold, and it may be determined that when the uplink frequency band in the first uplink frequency band group is designated for a higher-priority (higher than the priority threshold) service. Thus, it may be determined that the terminal may choose to switch to the second uplink frequency band group to perform the uplink transmission switching, so as to avoid a lower-priority service (lower than the priority threshold) occupying the uplink frequency band in the first uplink frequency band group.

In an embodiment, the method further includes: determining an uplink frequency band group candidate set according to a protocol agreement or indicating the uplink frequency band group candidate set to the terminal, where the first uplink frequency band group and the second uplink frequency band group belong to the uplink frequency band group candidate set.

In an embodiment, the method includes: determining an initial uplink frequency band group for the terminal to perform the uplink transmission switching according to a protocol agreement, or indicating an initial uplink frequency band group to the terminal.

It may be determined that when the terminal initially performs the uplink transmission switching, it may switch among the uplink frequency bands included in the initial uplink frequency band group, and the initial uplink frequency band group may be indicated to the terminal by the network device or determined based on the protocol agreement.

The uplink frequency band group that the terminal needs to switch to may be determined in the uplink frequency band group candidate set, when the terminal changes the uplink frequency band group on which the uplink transmission switching is based. For example, when the uplink transmission switching is performed among the uplink frequency bands included in the first uplink frequency band group, if the uplink frequency band group on which the uplink transmission switching is based needs to change, the terminal may select the second uplink frequency band group from the uplink frequency band group candidate set, and then switch to the second uplink frequency band group for the uplink transmission switching, and that is, the uplink transmission switching is performed among the uplink frequency bands included in the second uplink frequency band group. The uplink frequency band group candidate set may be determined and indicated by the network device to the terminal or determined based on the protocol agreement.

The embodiments of the present disclosure also propose a system for uplink transmission switching, including a terminal and a network device, the terminal is configured to implement the method for uplink transmission switching described in any of the above embodiments, and the network device is configured to implement the method for uplink transmission control described in any of the above embodiments.

In an embodiment, the terminal may determine the uplink frequency band group for the the uplink transmission switching, and the network device may also determine the uplink frequency band group for the terminal to perform the uplink transmission switching.

On one hand, the network device may only schedule or configure the terminal for uplink transmission in the uplink frequency band within the determined uplink frequency band group, and not schedule or configure the terminal for uplink transmission in the uplink frequency band beyond the uplink frequency band group.

On the other hand, the terminal only needs to prepare for communication on the uplink frequency bands in the uplink frequency band group (such as in terms of software, hardware, switching process, etc.), without preparing for communication on the uplink frequency band beyond the uplink frequency band group, which is beneficial for reducing the complexity of the uplink transmission switching for the terminal.

Corresponding to the embodiments of the method for uplink transmission switching and the method for uplink transmission control mentioned above, the present disclosure also provides embodiments of an apparatus for uplink transmission switching and an apparatus for uplink transmission control.

FIG. 10 is a schematic block diagram of an apparatus for uplink transmission switching according to an embodiment of the present disclosure. The apparatus for uplink transmission switching shown in this embodiment may be a terminal or an apparatus composed of modules in the terminal, and the terminal includes but is not limited to a mobile phone, a tablet computer, a wearable device, a sensor, an Internet of Things device, and other communication devices. The terminal may communicate with a network device, and the network device includes but is not limited to a network device in a communication system such as 4G, 5G, and 6G, for example, a base station, a core network, and the like.

As shown in FIG. 10, the apparatus for uplink transmission switching includes:

a processing module 1001, configured to determine an uplink frequency band group for the uplink transmission switching; and perform the uplink transmission switching among the uplink frequency bands included in the uplink frequency band group.

In an embodiment, the processing module is configured to determine a time-domain pattern of the uplink frequency band group; and determine an uplink frequency band group corresponding to a time-domain resource where the uplink transmission switching is performed according to the time-domain pattern.

In an embodiment, the processing module is further configured to determine that an effective period of a first uplink frequency band group where the uplink transmission switching is currently performed ends, and that the uplink frequency band indicated by a network device for uplink transmission does not belong to the first uplink frequency band group, and perform the uplink transmission switching by switching to a second uplink frequency band group.

In an embodiment, the processing module is further configured to determine that a timer corresponding to a first uplink frequency band group where the uplink transmission switching is currently performed times out, and perform the uplink transmission switching by switching to a second uplink frequency band group.

In an embodiment, the timer is started when the uplink transmission in the uplink frequency band included in the first uplink frequency band group ends, and is reset when the uplink transmission is performed in the uplink frequency band included in the first uplink frequency band group.

In an embodiment, the processing module is further configured to perform the uplink transmission switching a the first uplink frequency band group where the uplink transmission switching is currently performed to a second uplink frequency band group in a case that a service meets a preset condition.

In an embodiment, the preset condition includes at least one of the following: a service arrival rate being lower than an arrival rate value; a service priority being higher or lower than a priority threshold; a quality of service being lower than a quality of service threshold.

In an embodiment, the processing module is further configured to determine an uplink frequency band group candidate set, where the first uplink frequency band group and the second uplink frequency band group belong to the uplink frequency band group candidate set.

In an embodiment, the processing module is further configured to determine an initial uplink frequency band group according to an indication of a network device or a protocol agreement.

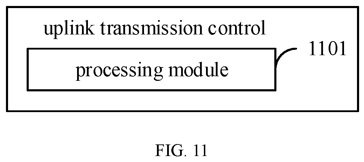

FIG. 11 is a schematic block diagram of an apparatus for uplink transmission control according to an embodiment of the present disclosure. The apparatus for uplink transmission switching shown in this embodiment may be a network device or an apparatus composed of modules in the network device. The network device may communicate with a terminal, and the terminal includes but is not limited to a mobile phone, a tablet computer, a wearable device, a sensor, an Internet of Things device, and other communication devices. The network device includes but is not limited to a network device in a communication system such as 4G, 5G, and 6G, for example, a base station, a core network, and the like.

As shown in FIG. 11, the apparatus for uplink transmission control includes:

a processing module 1101, configured to determine an uplink frequency band group for a terminal to perform uplink transmission switching; configured not to schedule or configure the terminal for uplink transmission in an uplink frequency band beyond the uplink frequency band group.

In an embodiment, the processing module is configured to determine a time-domain pattern of the uplink frequency band group; and determine an uplink frequency band group corresponding to a time-domain resource where the terminal performs the uplink transmission switching according to the time-domain pattern.

In an embodiment, the processing module is further configured to determine that an effective period of the first uplink frequency band group where the terminal currently performs the uplink transmission switching ends, and to indicate that an uplink frequency band used by the terminal for the uplink transmission does not belong to the first uplink frequency band group, and to determine that the terminal switches to a second uplink frequency band group for the uplink transmission switching.

In an embodiment, the processing module is further configured to determine that a timer corresponding to a first uplink frequency band group where the terminal currently performs the uplink transmission switching times out, and to determine that the terminal switches to a second uplink frequency band group for the uplink transmission switching.

In an embodiment, the timer is started when the uplink transmission in the uplink frequency band included in the first uplink frequency band group ends, and is reset when the uplink transmission is performed in the uplink frequency band included in the first uplink frequency band group.

In an embodiment, the processing module is further configured to switch from the first uplink frequency band group where the terminal currently performs the uplink transmission switching to a second uplink frequency band group for the uplink transmission switching in a case that it is determined that a service of the terminal meets a preset condition.

In an embodiment, the preset condition includes at least one of the following: a service arrival rate being lower than an arrival rate value; a service priority being higher or lower than a priority threshold; a quality of service being lower than a quality of service threshold.

In an embodiment, the processing module is further configured to determine an uplink frequency band group candidate set according to a protocol agreement or indicate an uplink frequency band group candidate set to the terminal, where the first uplink frequency band group and the second uplink frequency band group belong to the uplink frequency band group candidate set.

In an embodiment, the apparatus includes: determining an initial uplink frequency band group for the terminal to perform the uplink transmission switching according to a protocol agreement, or indicating an initial uplink frequency band group to the terminal.

With respect to the apparatuses in the above-mentioned embodiments, the specific ways for performing operations for individual modules therein have been described in detail in the embodiments regarding the methods, which will not be elaborated herein.

Since the apparatus embodiments substantially correspond to the method embodiments, reference is made to the partial description of the method embodiments. The above-described apparatus embodiments are merely for the purpose of illustration, in which the modules described as separate components may be or may not be physically separated, and the components displayed as modules may be or may not be physical modules, that is, either located at one place or distributed onto a plurality of network modules. The object of embodiments of the present disclosure may be achieved by some or all of the modules in accordance with practical requirements. It would be appreciated and executable by those skilled in the art without creative efforts.

The embodiments of the present disclosure further provide a communication apparatus, including: a processor; and a memory for storing a computer program; where when the computer program is executed by the processor, the process is configured to implement the method for uplink transmission switching described in any of the above-mentioned embodiments.

The embodiments of the present disclosure further provide a communication apparatus, including: a processor; and a memory for storing a computer program; where when the computer program is executed by the processor, the process is configured to implement the method for uplink transmission control described in any of the above-mentioned embodiments.

The embodiments of the present disclosure further provide a computer-readable storage medium having stored therein a computer program that, when executed by a processor, causes the processor to implement the method for r uplink transmission switching described in any of the above-mentioned embodiments.

The embodiments of the present disclosure further provide a computer-readable storage medium having stored therein a computer program that, when executed by a processor, causes the processor to implement the method for uplink transmission control described in any of the above-mentioned embodiments.

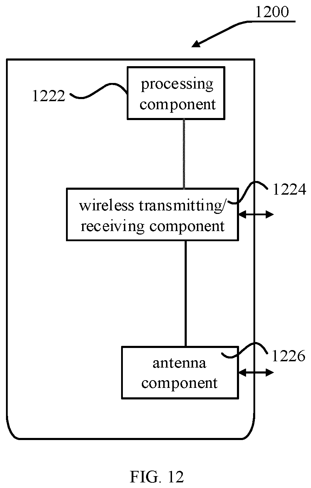

As shown in FIG. 12, FIG. 12 is a block diagram showing an apparatus 1200 for uplink transmission control according to an embodiment of the present disclosure. The apparatus 1200 may be provided as a base station. Referring to FIG. 12, the apparatus 1200 includes a processing component 1222, a wireless transmitting/receiving component 1224, an antenna component 1226, and a signal processing portion specific to a wireless interface, in which the processing component 1222 may further include one or more processors. One of the processors in the processing component 1222 may be configured to implement the method for uplink transmission control described in any of the above-mentioned embodiments.

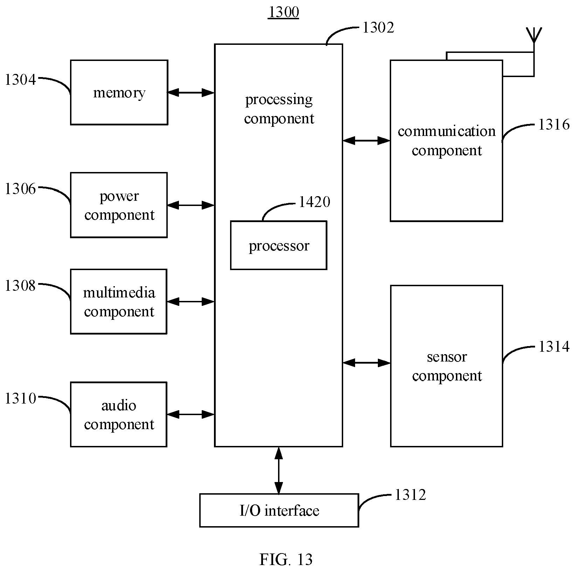

FIG. 13 is a block diagram showing an apparatus 1300 for uplink transmission switching according to an embodiment of the present disclosure. For example, apparatus 1300 may be a mobile phone, computer, digital broadcast terminal, messaging device, game console, tablet device, medical device, fitness device, personal digital assistant, and the like.

Referring to FIG. 13, the apparatus 1300 may include one or more of the following components: a processing component 1302, a memory 1304, a power component 1306, a multimedia component 1308, an audio component 1310, an input/output (I/O) interface 1312, a sensor component 1314, and a communication component 1316.

The processing component 1302 typically controls overall operations of the apparatus 1300, such as the operations associated with display, phone calls, data communications, camera operations, and recording operations. The processing component 1302 can include one or more processors 1320 to execute instructions to perform all or some of the steps in the above-described method for uplink transmission switching. Moreover, the processing component 1302 may include one or more modules which facilitate the interaction between the processing component 1302 and other components. For instance, the processing component 1302 may include a multimedia module to facilitate the interaction between the multimedia component 1308 and the processing component 1302.

The memory 1304 is configured to store various types of data to support the operation of the apparatus 1300. Examples of such data include instructions for any applications or methods operated on the apparatus 1300, contact data, phonebook data, messages, pictures, videos, etc. The memory 1304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1306 provides power to various components of the apparatus 1300. The power component 1306 may include a power management system, one or more power sources, and any other components associated with the generation, management, and distribution of power in the apparatus 1300.

The multimedia component 1308 includes a screen providing an output interface between the apparatus 1300 and a user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of time and a pressure associated with the touch or swipe action. In some embodiments, the multimedia component 1308 includes a front camera and/or a rear camera. The front camera and/or the rear camera may receive an external multimedia datum while the apparatus 1300 is in an operation mode, such as a photographing mode or a video mode. Each of the front camera and the rear camera may be a fixed optical lens system or have focus and optical zoom capability.

The audio component 1310 is configured to output and/or input audio signals. For example, the audio component 1310 includes a microphone (MIC) configured to receive an external audio signal when the apparatus 1300 is in an operation mode, such as a call mode, a recording mode, and a voice recognition mode. The received audio signal may be further stored in the memory 1304 or transmitted via the communication component 1316. In some embodiments, the audio component 1310 further includes a speaker to output audio signals.

The I/O interface 1312 provides an interface between the processing component 1302 and peripheral interface modules, such as keyboards, click wheels, buttons, and the like. The buttons may include, but are not limited to, a home button, a volume button, a starting button, and a locking button.

The sensor component 1314 includes one or more sensors to provide status assessments of various aspects of the apparatus 1300. For instance, the sensor component 1314 may detect an open/closed status of the apparatus 1300, relative positioning of components, e.g., the display and the keypad, of the apparatus 1300, a change in position of the apparatus 1300 or an component of the apparatus 1300, a presence or absence of user contact with the apparatus 1300, an orientation or an acceleration/deceleration of the apparatus 1300, and a change in temperature of the apparatus 1300. The sensor component 1314 may include a proximity sensor configured to detect the presence of nearby objects without any physical contact. The sensor component 1314 may include a light sensor, such as a CMOS or CCD image sensor, for use in imaging applications. In some embodiments, the sensor component 1314 may further include an accelerometer sensor, a gyroscope sensor, a magnetic sensor, a pressure sensor, or a temperature sensor.

The communication component 1316 is configured to facilitate communication, wired or wireless, between the apparatus 1300 and other devices. The apparatus 1300 can access a wireless network based on a communication standard, such as WiFi, 2G, or 3G, 4G LTE, 5G NR or a combination thereof. In an illustrative embodiment, the communication component 1316 receives a broadcast signal or broadcast associated information from an external broadcast management system via a broadcast channel. In an illustrative embodiment, the communication component 1316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the apparatus 1300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-mentioned method for uplink transmission switching.

In an illustrative embodiment, there is also provided a non-transitory computer readable storage medium including instructions, such as included in the memory 1304, executable by the processor 1320 in the apparatus 1300, for completing the above-mentioned method for uplink transmission switching. For example, the non-transitory computer-readable storage medium may be a ROM, a random access memory (RAM), a CD-ROM, a magnetic tape, a floppy disc, an optical data storage device, and the like.

Other embodiments of the present disclosure will be apparent to those skilled in the art from consideration of the specification and practice of the present disclosure described here. The present disclosure is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the present disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the embodiments of the present disclosure only be limited by the appended claims.

It is to be noted that in this context, relational terms such as first and second are used solely to distinguish one entity or operation from another entity or operation, it does not necessarily require or imply any such actual relationship or sequence between these entities or operations. The term "include", "comprise" or any other variation thereof is intended to cover a non-exclusive inclusion, so that a process, method, article or device that includes a series of elements does not only include those elements, but also includes other elements that are not explicitly listed, or also includes elements inherent in such a process, method, article or device. Without further restrictions, an element defined by the statement "including a... " does not exclude the existence of another identical element in the process, method, article or device that includes the element.

The methods and apparatuses provided by the embodiments of the present disclosure have been described in detail above, and specific examples are used to illustrate the principle and implementation of the present disclosure. The description of the above embodiments is only used to help understand the methods and core ideas of the present disclosure. At the same time, for those skilled in the art, there will be some changes in the specific implementation and application scope according to the idea of the present disclosure. In summary, the content of the specification should not be construed as a limitation to the present disclosure.

**Claims**

1. A method for uplink transmission switching, performed by a terminal, comprising:

   determining an uplink frequency band group for the uplink transmission switching; and
   performing the uplink transmission switching among uplink frequency bands comprised in the uplink frequency band group.

2. The method according to claim 1, wherein the determining the uplink frequency band group for the uplink transmission switching comprises:

   determining a time-domain pattern of the uplink frequency band group; and
   determining an uplink frequency band group corresponding to a time-domain resource where the uplink transmission switching is performed according to the time-domain pattern.

3. The method according to claim 1, further comprising:

   determining that an effective period of a first uplink frequency band group where the uplink transmission switching is currently performed ends and that an uplink frequency band indicated by a network device for uplink transmission does not belong to the first uplink frequency band group, and performing the uplink transmission switching by switching to a second uplink frequency band group.

4. The method according to claim 1, further comprising: determining that a timer corresponding to a first uplink frequency band group where the uplink transmission switching is currently performed times out, and performing the uplink transmission switching by switching to a second uplink frequency band group.

5. The method according to claim 4, wherein the timer is started when uplink transmission in an uplink frequency band comprised in the first uplink frequency band group ends, and the timer is reset when the uplink transmission is performed in the uplink frequency band comprised in the first uplink frequency band group.

6. The method according to claim 1, further comprising: in a case that a service meets a preset condition, performing the uplink transmission switching by switching from a first uplink frequency band group where the uplink transmission switching is currently performed to a second uplink frequency band group.

7. The method according to claim 6, wherein the preset condition comprises at least one of following:

a service arrival rate being lower than an arrival rate value;

a service priority being higher or lower than a priority threshold; or

a quality of service being lower than a quality of service threshold.

8. The method according to any one of claims 3 to 7, further comprising:
determining an uplink frequency band group candidate set, wherein the first uplink frequency band group and the second uplink frequency band group belong to the uplink frequency band group candidate set.

9. The method according to any one of claims 3 to 7, further comprising:
determining an initial uplink frequency band group according to an indication of the network device or a protocol agreement.

10. A method for uplink transmission control, performed by a network device, comprising:

determining an uplink frequency band group for a terminal to perform uplink transmission switching; and
not scheduling or configuring the terminal for uplink transmission in an uplink frequency band beyond the uplink frequency band group.

11. The method according to claim 10, wherein the determining the uplink frequency band group for the uplink transmission switching comprises:

determining a time-domain pattern of the uplink frequency band group; and
determining an uplink frequency band group corresponding to a time-domain resource where the terminal performs the uplink transmission switching according to the time-domain pattern.

12. The method according to claim 10, further comprising:
determining that an effective period of a first uplink frequency band group where the terminal currently performs the uplink transmission switching ends, and indicating that an uplink frequency band used by the terminal for the uplink transmission does not belong to the first uplink frequency band group, and determining that the terminal switches to a second uplink frequency band group for the uplink transmission switching.

13. The method according to claim 10, further comprising:
determining that a timer corresponding to a first uplink frequency band group where the terminal currently performs the uplink transmission switching times out, and determining that the terminal switches to a second uplink frequency band group for the uplink transmission switching.

14. The method according to claim 13, wherein the timer is started when the uplink transmission in an uplink frequency band comprised in the first uplink frequency band group ends, and the timer is reset when the uplink transmission is performed in the uplink frequency band comprised in the first uplink frequency band group.

15. The method according to claim 10, further comprising:
in a case of determining that a service of the terminal meets a preset condition, the terminal performing the uplink transmission switching by switching from a first uplink frequency band group where the terminal currently performs to a second uplink frequency band group.

16. The method according to claim 15, wherein the preset condition comprises at least one of following:

a service arrival rate being lower than an arrival rate value;
a service priority being higher or lower than a priority threshold; or
a quality of service being lower than a quality of service threshold.

17. The method according to any one of claims 12 to 16, further comprising:
determining an uplink frequency band group candidate set according to a protocol agreement or indicating an uplink frequency band group candidate set to the terminal, wherein the first uplink frequency band group and the second uplink frequency band group belong to the uplink frequency band group candidate set.

18. The method according to any one of claims 12 to 16, further comprising:
determining an initial uplink frequency band group for the terminal to perform the uplink transmission switching according to a protocol agreement, or indicating an initial uplink frequency band group to the terminal.

19. A system for uplink transmission switching, comprising a terminal and a network device, wherein the terminal is configured to implement the method for uplink transmission switching according to any one of claims 1 to 9, and the network device is configured to implement the method for uplink transmission control according to any one of claims 10 to 18.

**20.** An apparatus for uplink transmission switching, comprising:

a processing module, configured to determine an uplink frequency band group for the uplink transmission switching; and perform the uplink transmission switching among the uplink frequency bands comprised in the uplink frequency band group.

**21.** An apparatus for uplink transmission control, comprising:

a processing module, configured to determine an uplink frequency band group for a terminal to perform uplink transmission switching; and not schedule or configure the terminal for uplink transmission in an uplink frequency band beyond the uplink frequency band group.

**22.** A communication apparatus, comprising:

a processor; and
a memory used for storing a computer program; when the computer program is performed by the processor, the method for uplink transmission switching according to any one of claims 1 to 9 is implemented.

**23.** A communication apparatus, comprising:

a processor; and
a memory used for storing a computer program; when the computer program is performed by the processor, the method for uplink transmission control according to any one of claims 10 to 18 is implemented.

**24.** A computer-readable storage medium for storing a computer program, wherein when the computer program is performed by a processor, the method for uplink transmission switching according to any one of claims 1 to 9 is implemented.

**25.** A computer-readable storage medium for storing a computer program, wherein when the computer program is performed by a processor, the method for uplink transmission control according to any one of claims 10 to 18 is implemented.

determining an uplink frequency band group for the uplink transmission switching — S101

performing the uplink transmission switching among uplink frequency bands comprised in the uplink frequency band group — S102

FIG. 1

determining a time-domain pattern of the uplink frequency band group — S201

determining an uplink frequency band group corresponding to a time-domain resource where the uplink transmission switching is performed according to the time-domain pattern — S202

performing the uplink transmission switching among uplink frequency bands comprised in the uplink frequency band group — S102

FIG. 2

slot # 0 to slot # 4 | slot # 5 to slot # 9 | slot # 10 to slot # 14

Band#1

Band#2

Band#3

Band#4

allow the uplink transmission switching

not allow the uplink transmission switching

FIG. 3

determining an uplink frequency band group for the uplink transmission switching ～ S101

performing the uplink transmission switching among uplink frequency bands comprised in the uplink frequency band group ～ S102

determining that an effective period of a first uplink frequency band group where the uplink transmission switching is currently performed ends and that an uplink frequency band indicated by a network device for uplink transmission does not belong to the first uplink frequency band group, and performing the uplink transmission switching by switching to a second uplink frequency band group ～ S401

FIG. 4

FIG. 5

determining an uplink frequency band group for the uplink transmission switching ⟩∼ S101

↓

performing the uplink transmission switching among uplink frequency bands comprised in the uplink frequency band group ⟩∼ S102

↓

determining that a timer corresponding to a first uplink frequency band group where the uplink transmission switching is currently performed times out, and performing the uplink transmission switching by switching to a second uplink frequency band group ⟩∼ S601

FIG. 6

FIG. 7

determining an uplink frequency band group for the uplink transmission switching    ~ S101

performing the uplink transmission switching among uplink frequency bands comprised in the uplink frequency band group    ~ S102

in a case that a service meets a preset condition, performing the uplink transmission switching by switching from a first uplink frequency band group where the uplink transmission switching is currently performed to a second uplink frequency band group    ~ S801

FIG. 8

determining an uplink frequency band group for a terminal to perform uplink transmission switching    ~ S901

not scheduling or configuring the terminal for uplink transmission in an uplink frequency band beyond the uplink frequency band group    ~ S902

FIG. 9

apparatus for uplink transmission switching

processing module    ┌ 1001

FIG. 10

uplink transmission control

processing module — 1101

FIG. 11

1200

1222

processing
component

1224

wireless transmitting/
receiving component

1226

antenna
component

FIG. 12

FIG. 13

## INTERNATIONAL SEARCH REPORT

| International application No. |
| --- |
| **PCT/CN2022/109250** |

**A.    CLASSIFICATION OF SUBJECT MATTER**

H04W 72/04(2009.01)i

According to International Patent Classification (IPC) or to both national classification and IPC

**B.    FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNPAT, CNKI, EPODOC, WPI, 3GPP: 上行, 载波, 频带, 切换, 分量, 链路, 定时器, 时域, 图案, 模式, 条件, uplink, UL, TX, switch, band, carrier, componet, link, slot, timer, pattern, handover

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2022076599 A1 (QUALCOMM INC.) 14 April 2022 (2022-04-14) description, paragraphs [0026]-[0088], and figures 3 and 6 | 1-25 |
| X | CN 114642048 A (QUALCOMM INC.) 17 June 2022 (2022-06-17) description, paragraphs [0055]-[0134] | 1-25 |
| A | CN 112751600 A (CHINA TELECOM CORP., LTD.) 04 May 2021 (2021-05-04) entire document | 1-25 |
| A | WO 2021249487 A1 (HUAWEI TECHNOLOGIES CO., LTD.) 16 December 2021 (2021-12-16) entire document | 1-25 |
| A | HUAWEI et al. "Discussions on enhancements for UL Tx switching" *3GPP TSG RAN WG1 Meeting #104-e R1-2101270*, 05 February 2021 (2021-02-05), entire document | 1-25 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 December 2022** | **16 December 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/109250**

| Patent document cited in search report | | | Publication date (day/month/year) | Patent family member(s) | | | Publication date (day/month/year) |
|---|---|---|---|---|---|---|---|
| WO | 2022076599 | A1 | 14 April 2022 | None | | | |
| CN | 114642048 | A | 17 June 2022 | WO | 2021142824 | A1 | 22 July 2021 |
| CN | 112751600 | A | 04 May 2021 | None | | | |
| WO | 2021249487 | A1 | 16 December 2021 | CN | 113784339 | A | 10 December 2021 |

Form PCT/ISA/210 (patent family annex) (January 2015)